(19) Europäisches Patentamt
European Patent Office
Office européen des brevets

(11) Numéro de publication: **0 293 306 B1**

(12) **FASCICULE DE BREVET EUROPEEN**

(45) Date de publication de fascicule du brevet: **09.06.93**

(51) Int. Cl.[5]: **C07F 7/08**

(21) Numéro de dépôt: **88420076.7**

(22) Date de dépôt: **03.03.88**

(54) **Procédé de préparation en continu d'oximinosilanes.**

(30) Priorité: **05.03.87 FR 8703206**

(43) Date de publication de la demande:
**30.11.88 Bulletin 88/48**

(45) Mention de la délivrance du brevet:
**09.06.93 Bulletin 93/23**

(84) Etats contractants désignés:
**AT BE CH DE ES FR GB GR IT LI LU NL SE**

(56) Documents cités:
**DE-A- 2 220 101**
**FR-A- 2 067 636**

(73) Titulaire: **RHONE-POULENC CHIMIE**
**25, quai Paul Doumer**
**F-92408 Courbevoie Cédex(FR)**

(72) Inventeur: **Baule, Pierre**
**rue des Chenevis Solaize**
**F-69360 Saint-Symphorien-d'Ozon(FR)**
Inventeur: **Chizat, François**
**27, rue Alexis Carrel**
**F-69500 Bron(FR)**

(74) Mandataire: **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

**EP 0 293 306 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte à un procédé de fabrication en continu d'oximinosilanes (appelés également iminooxysilanes) tels que notamment le méthyl tris(méthyléthyl cétoximo)silane ou le vinyl tris(méthyléthyl cétoximo)silane, en faisant réagir le méthyltrichlorosilane ou le vinyltrichlorosilane avec la méthyléthyl cétoxime.

Il est connu de préparer des oximinosilanes, notamment par la demande de brevet européen 82 324, publiée le 29 juin 1983 qui décrit plus précisément un procédé dans lequel on fait réagir entre eux une oxime et un silane halogéné, l'oxime étant dans un rapport molaire au moins égal à 2n/1 par rapport au silane halogéné, n représentant le nombre d'atomes d'halogène dudit silane halogéné. L'oxime en excès agit ainsi en tant qu'accepteur de l'HCl formé dans la réaction. Dans cette demande européenne 82 324 il est indiqué (page 10, lignes 5-11) que ce procédé peut être mis en oeuvre en continu et que le temps de séjour des réactifs est alors de l'ordre de 1 à 3 heures, bien que dans les exemples 1 à 12 il ne soit aucunement décrit un procédé dans lequel on injecte simultanément et en continu les réactifs dans le réacteur. Le procédé décrit dans cette demande européenne 82 324 exige d'autre part de procéder à des décantations, séparations et alcanisations dans des appareils munis d'agitateurs.

Dans cette demande européenne 82 324 il est décrit, pages 1 et 2 d'autres modes de préparation d'oximinosilanes, mais dans ces procédés de l'art antérieur on utilise par exemple des bases organiques, telle la triéthylamine, comme accepteur d'acide chlorhydrique, mais il est décrit que ces produits peuvent entraîner des risques d'explosion lors de la distillation. Dans d'autres procédés on fait réagir le sel de sodium de l'oxime avec une quantité stoechiométrique du chlorosilane, mais cette manière d'opérer présente notamment les inconvénients d'exiger une étape de plus pour la préparation du sel sodé de l'oxime, et la séparation du chlorure de sodium, formé lors de la réaction, est mal aisée.

Dans la demande allemande n° 2 220 101 il est décrit un procédé pour faire réagir une substance halogènée avec des composés qui contiennent des atomes d'hydrogène réactifs. Ce procédé, dans lequel la présence de solvant est éventuelle, est caractérisé (voir revendication 1, ou description page 3, lignes 13-21, ou exemple 1), en ce que le composé salifié résultant de l'action de l'hydracide avec l'accepteur d'acide est éliminé en continu de la masse réactionnelle et en ce que le liquide obtenu après cette élimination retourne dans le réacteur, ce liquide contenant donc le produit soluble de la réaction ainsi que les réactifs qui n'ont pas réagi.

Un but de la présente invention est donc un procédé ne présentant pas les inconvénients des procédés de l'art antérieur.

Un autre but de la présente invention est un procédé dans lequel les réactifs et le solvant sont introduits en continu et simultanément dans le réacteur.

Un autre but de la présente invention est un procédé dans lequel l'accepteur de l'acide chlorhydrique formé est un produit gazeux.

Un autre but de la présente invention est un procédé continu présentant une sécurité accrue.

Un autre but de la présente invention est un procédé dans lequel le solvant utilisé est ininflammable.

Un autre but de la présente invention est un procédé dans lequel le solvant utilisé est un produit organique dont le point d'ébullition est inférieur à 60 °C.

Un autre but de la présente invention est un procédé dans lequel le temps de séjour des produits dans le réacteur est inférieur à une heure, de préférence compris entre 10 et 40 minutes.

Un autre but de la présente invention est un procédé dans lequel on peut ne pas avoir besoin de refroidir le réacteur.

Un autre but de la présente invention est un procédé dans lequel les oximinosilanes obtenus sont peu ou pas colorés.

Un autre but de la présente invention est un procédé continu dans lequel les rendements sont généralement égaux ou même supérieurs à 80 %, notament lorsque les oximinosilanes préparés sont le méthyl tris(méthyléthyl cétoximo)silane ou le vinyl tris(méthyléthyl cétoximo)silane.

Il a donc été trouvé, et c'est ce qui fait l'objet de la présente invention, un procédé de fabrication en continu d'oximinosilanes, caractérisé en ce que :

a) - on injecte en continu et silultanément dans un réacteur muni d'une agitation :

. un solvant organique,
. du gaz ammoniac,
. un silane halogéné de formule $R_{4-n}\,SiX_n$, dans lequel X représente un halogène et R représente un radical alkyle ayant de 1 à 15 atomes de carbone, de préférence de 1 à 6 atomes de carbone, un radical alkényle ayant de 2 à 15 atomes de carbone, de préférence de 2 à 6 atomes de carbone, un radical aryle, aralkyle, cycloalkyle ayant de 5 à 15 atomes de carbone, ces radicaux pouvant

éventuellement avoir des atomes d'hydrogène substitués par des atomes d'halogènes inertes dans la réaction du procédé, n étant égal à 1, 2, 3 ou 4,

. une oxime de formule R'R"C = N-OH, dans laquelle R' et R" peuvent représenter un atome d'hydrogène, un radical alkyle ayant de 1 à 15 atomes de carbone, de préférence de 1 à 6 atomes de carbone, un radical alkényle ayant de 2 à 15 atomes de carbone, de préférence de 2 à 6 atomes de carbone, un radical aryle, cycloalkyle, cycloalkènyle, aralkyle ou alkylaryle ayant de 5 à 15 atomes de carbone, ces radicaux étant éventuellement substitués par des atomes d'halogènes inertes dans la réaction, R' et R" pouvant former ensemble un groupement alkylène tel que $-(CH_2)_m-$, dans lequel m représente 3 à 7, lesdits groupements méthylène pouvant avoir des atomes d'hydrogène substitués par des atomes d'halogènes inertes dans la réaction,

le rapport $\dfrac{\text{nombre de moles de } NH3}{\text{nombre de moles de } R_{4-n}SiX_n \text{ multiplié par n}}$ étant compris entre 1,04 et 1,46

le rapport $\dfrac{\text{nombre de moles d'oxime}}{\text{nombre de moles de } R_{4-n}SiX_n \text{ multiplié par n}}$ étant compris entre 1 et 1,2,

b) - on recueille la masse réactionnelle qui sort en continu du réacteur grâce à un dispositif de trop-plein,

c) - on élimine de cette masse réactionnelle le précipité de $XNH_4$ obtenu et on distille la phase liquide organique pour en recueillir l'oximinosilane.

Le procédé selon la présente invention sera mieux décrit à l'aide de la figure jointe qui illustre, à titre d'exemple, de façon schématique et sans échelle déterminée, un appareillage utilisable pour la mise en oeuvre du procédé.

Dans le procédé selon la présente invention, comme cela a déjà été indiqué ci-avant, le produit qui fixe l'acide chlorhydrique formé au cours de la réaction est du gaz ammoniac.

Le solvant utilisé est un solvant organique inerte dont le point d'ébullition est généralement inférieur à 60 °C, ce solvant étant de préférence ininflammable. Parmi les solvants convenant pour la mise en oeuvre de ce procédé les alcanes perchlorofluorés se sont montrés très intéressants. On peut citer notamment les trichlorotrifluoréthanes et plus particulièrement le 1,1,2-trichloro-1,2,2-trifluoro-éthane dont lep oint d'ébullition est de 47,7 °C à la pression normale, ou leur mélange. De tels produits sont commercialisés par la société ATOCHEM sous le nom commercial de FLUGENE.

Le silane halogéné utilisé dans ce procédé a pour formule $R_{4-n}$ $SiX_n$, dans lequel X représente un atome d'halogène, n est égal à 1, 2, 3 ou 4 et R a la signification déjà donnée ci-avant. A titre d'exemples de silanes pouvant être utilisés dans le procédé selon la présente invention on peut citer le tétrachlorosilane, le triméthylchlorosilane, le diméthyldichlorosilane, le méthyltrichlorosilane, le méthyléthyldichlorosilane, l'éthyltrichlorosilane, le diéthyldichlorosilane, le triéthylchlorosilane, le n-propyltrichlorosilane, l'isopropyltrichlorosilane, le 2-chloroéthyltrichlorosilane, le 3-chloropropyltrichlorosilane, le triéthylchlorosilane, le vinyltrichlorosilane, le vinylméthyldichlorosilane, le propényltrichlorosilane, l'allytrichlorosilane, le phényltrichlorosilane, le benzyltrichlorosilane. De préférence, dans le silane utilisé de formule $R_{4-n}$ $SiX_n$, n est égal à 3, X représente un atome de chlore et R représent un radical méthyle, éthyle ou vinyle.

L'oxime utilisée dans le procédé selon la présente invention a pour formule R'R"C = N-OH, dans laquelle R' et R" représentent un atome d'hydrogène ou les radicaux indiqués ci-avant dans la description. R' et R" peuvent notamment représenter des radicaux méthyle, éthyle, propyle, butyle, pentyle, hexyle, vinyle, butènyle, cyclopentyle, cyclohexyle, cyclooctyle, méthyl-3 cyclohexyle-1, cyclopentènyle, cyclohexényle, phényle, tolyle, xylyle, benzyle. A titre d'exemples particuliers d'oximes ont peut citer notamment la :

| | |
|---|---|
| $CH_3 - CH = NH - OH$ | acétaldéhyde-oxime |
| $(CH_3)_2 - C = N - OH$ | acétone-oxime |
| 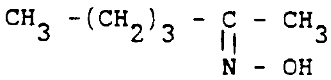 | hexanone-2 oxime |
| $C_3H_7 - CH = N - OH$ | butaraldéhyde-1 oxime |
| 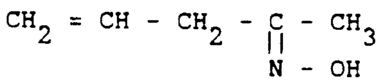 | pentène-4 one 2 oxime |
| 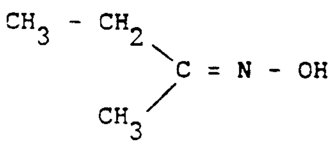 | méthyléthyl cétone-oxime (butanone-oxime) |
| $C_6H_5 - CH = N - OH$ | benzaldéhyde-oxime |
| 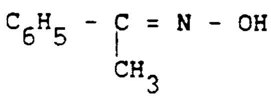 | acétophénone-oxime |
| $(C_6H_5)_2\ C = N - OH$ | benzophénone-oxime |
| 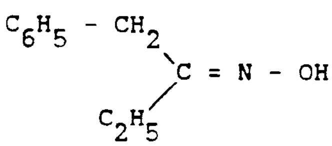 | benzyléthyl cétone-oxime |
| $C_6H_5 - CH = CH - CH = N - OH$ | cinnamaldéhyde-oxime |

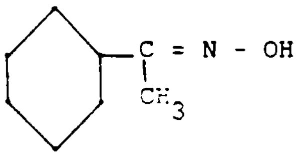

cyclohexylméthyl cétone-oxime

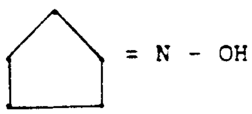

cyclopentanone-oxime

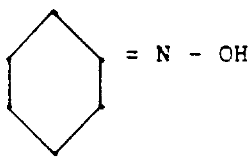

cyclohexanone-oxime

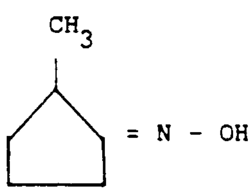

méthyl-5 cyclopentanone-1 oxime

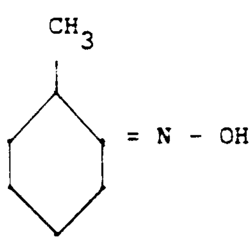

méthyl-5 cyclohexanone-1 oxime

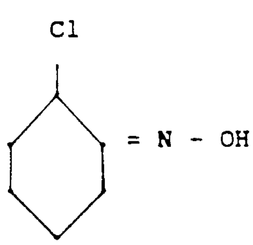

chloro-5 cyclohexanone-1 oxime

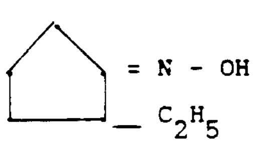

éthyl-2 cyclopentanone-1 oxime

Les oximes préférées comprennent notamment la formaldéhyde oxime, l'acétaldéhyde oxime, l'acétone oxime, la méthyléthyl cétone oxime, la diéthylcétone oxime et la cyclohexanone oxime.

La méthyléthyl cétone-oxime est particulièrement intéressante car le produit de réaction de cette oxime notamment avec le méthyltrichlorosilane ou avec le vinyltrichlorosilane peut être utilisé à température ambiante comme agent de fonctionnalisation et de réticulation dans de nombreux composés silicones polymériques, notamment pour la fabrication des élastomères vulcanisables à froid.

Pour la mise en oeuvre du procédé selon la présente invention on opère généralement de la façon suivante en se référant à la figure qui illustre, à titre d'exemple et de façon schématique, un appareillage utilisable pour la mise en oeuvre du procédé.

On commence par alimenter le réacteur (1) avec le solvant organique choisi, au débit désiré, après avoir mis l'agitateur (2) en mouvement et mis en circulation le liquide de refroidissement, généralement de l'eau, dans les réfrigérants (3 et 4) et dans la colonne d'absorption (5). L'intérieur du réacteur (1) est sensiblement à la pression atmosphérique, ce réacteur étant muni d'un dispositif (6) pour mesurer la température de la masse, et de moyens de raccordement connus pour éviter que l'humidité atmosphérique ne puisse pénétrer dans son intérieur. Le solvant (en provenance d'un réservoir non représenté dont on peut suivre la perte de poids) est introduit dans le réacteur (1) par la canalisation (7) qui se raccorde sur une tubulure (9) disposée sur la partie haute du réacteur (1). Dans le cas de la figure le solvant est ainsi introduit dans le réacteur (1) au-dessus de la masse réactionnelle, mais dans un autre mode de mise en oeuvre du procédé il est avantageux que le solvant soit introduit dans la partie inférieure du réacteur (1). Lorsque le solant a rempli le réacteur (1), c'est-à-dire lorsqu'il a atteint le dispositif (10) de trop-plein on intoduit le gaz ammoniac, au débit voulu, dans le réacteur (1) grâce à une canalisation (11) qui débouche dans la partie inférieure dudit réacteur (1). La canalisation (11) est munie de moyens (12) permettant de mesurer et de contrôler ce débit de gaz ammoniac provenant généralement d'une bouteille métallique dont on suit l'évolution de poids. Le dispositif (10) de trop-plein est avantageusement muni d'une tubulure interne (13) plongeant légèrement dans la masse réactionnelle, afin de ne pas retirer des vapeurs par ce dispositif (10) de trop-plein. Lorsque le gaz ammoniac a saturé le solvat contenu dans le réacteur (1), il sort de celui-ci par la tubulure (14) raccordée au réfrigérant (3) qu'il traverse, passe par la canalisation (15) mettant en communication la partie haute du réfrigérant (3) avec la partie inférieure de la colonne (5) munie d'un garnissage interne, traverse la colonne (5) et le réfrigérant (4) lui faisant suite, et il sort de l'appareillage par la canalisation (16) munie de moyens, non représentés, pour déceler et mesurer l'échappement du gaz ammoniac en excès dans la réaction et pour éviter que l'humidité atmosphérique puisse pénétrer dans cette canalisation (16).

Lorsque le gaz ammoniac s'échappe de l'appareillage par la canalisation (16) on intoduit alors dans la partie supérieure de la colonne (5) l'oxime (de formule R′R″C = N - OH) entraînée dans la canalisation (17) grâce à une pompe doseuse (18) au débit souhaité, l'oxime provenant par exemple d'un récipient dont on peut suivre les variations de poids. La colonne (5) contient intérieurement un garnissage, par exemple des anneaux de Raschig ou des hélices dites de Fensk, qui sont des spirales en verre coupées à chaque tour, et commercialisées par la Société PROLABO (catalogue 1987, page 427).

L'oxime est ainsi imprégnée de gaz ammoniac avant d'être introduite dans la partie inférieure du réacteur (1) grâce à la canalisation (19). Dès que l'oxime entre dans le réacteur on met en fonctionnement la pompe doseuse (20) qui entraîne le silane halogéné (de formule $R_{4-n}$ $SiX_n$) dans la canalisation (21) au débit souhaité, ce silane provenant par exemple d'un récipient dont les variations de poids sont mesurées. La canalisation (21) débouche dans la partie inférieure du réacteur (1).

On continue ensuite à introduire dans le réacteur (1) simultanément et aux débits souhaités : le solvant organique, l'ammoniac, l'oxime et le silane halogéné.

Généralement le rapport pondéral solvant/$R_{4-n}$ $SiX_n$ est compris entre 5 et 20 (bornes comprises), tandis que

$$\text{le rapport } \frac{\text{nombre de moles d'oxime}}{\text{nombre de moles de } R_{4-n}\ SiX_n \text{ multiplié par n}}$$

est compris entre 1 et 1,2, de préférence entre 1,005 et 1,05 (bornes comprises)

En effet il est préférable d'avoir un excès d'oxime pour être sûr de ne pas former des silazanes.

Pour la sécurité du procédé :

$$\text{le rapport } \frac{\text{nombre de moles de NH3}}{\text{nombre de moles de } R_{4-n}\ SiX_n \text{ multiplié par n}}$$

est compris entre 1,04 et 1,46, de préférence entre 1,1 et 1,36 (bornes comprises).

Au cours de l'introduciton des produits ci-avant dans le réacteur (1) la masse réactionnelle s'échauffe et les vapeurs du solvant utilisé peuvent refluer grâce au réfrigérant (3). Eventuellement le réacteur (1) peut avoir une double enveloppe permettant de le refroidir, mais le procédé selon la présente invention est avantageusement mis en oeuvre sans avoir à refroidir ledit réacteur (1). Une partie de la masse réactionnelle contenant notamment de l'halogénure d'ammonium de formule $NH_4X$ (formé au cours de la réaction entre le silane halogéné de formule $R_{4-n}$ $SiX_n$, l'oxime de formule R'R″C = N - OH et l'ammoniac) sort en continu du réacteur (1) pour aller dans le récipient (22) grâce à la canalisation (23) en relation avec le dispositif de trop-plein (10) du réacteur (1). Ce récipient (22) comprend une ouverture (24) permettant sa mise à la pression atmosphérique sans que l'humidité puisse pénétrer dans ce récipient. Cette masse réactionnelle soutirée en continu est alors filtrée pour en éliminer l'halogénure d'ammonium qui est rincé avec du solvant, avantageusement le même solvant que celui introduit dans le réacteur (1). Le filtrat, contenant le solvant, l'oxime (éventuellement, si un excès est utilisé) et l'iminooxysilane formé, est alors soumis à une distillation pour en séparer le solvant qui peut être recyclé dans les réacteur (1) par la canalisatin (7). Si l'on souhaite isoler l'iminooxysilane (appelée également oximinosilane) on continue la séparation de l'oxime et de l'oximinosilane par distillation plus poussée sous vide. Dans la mesure où un peu d'oxime dans l'iminooxysilane obtenu n'est pas génant pour l'application envisagée (par exemple comme agent de réticulation de polymère silicone) on peut se contenter de doser l'oximinosilane formé par chromatographie dans le résidu de distillation après avoir chassé le solvant organique. Les rendements en oximinosilane par rapport au silane halogéné ($R_{4-n}$ $SiX_n$) introduit dans le réacteur sont généralement supérieurs à 80 %. D'autre part le temps de séjour des réactifs dans le réacteur (1) est inférieur à une heure, de préférence entre 10 et 40 minutes.

- EXEMPLE 1 :

Préparation de

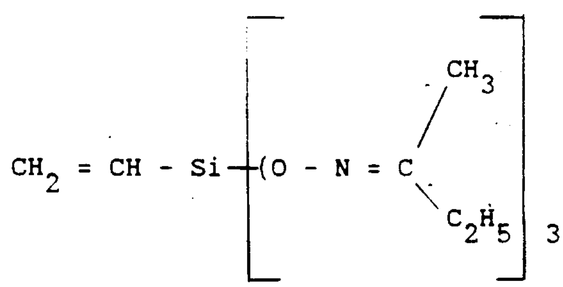

appelé notamment vinyltris(méthyléthylcétoximo)silane ou vinyltris(2-butylidène iminooxy)silane.

On utilise l'appareillage représenté sur la figure. Le réacteur (1) a un volume total de deux litres et le dispositif (10) de trop-plein est positionné de façon telle que le volume de la masse réactionnelle soit de un litre. L'agitateur (2) comporte des pales en polytétrafluoroéthylène et tourne à 160 tours à la minute.

On commence par introduire dans le réacteur par la canalisation (7), à un débit de 2 071,5 g/h, le solvant organique choisi, à savoir du 1,1,2-trichloro-1,2,2 trifluoréthane, commercialisé par la Société ATOCHEM sous la référence "Flugène 113", après avoir mis en circulation l'eau de réfrigération dans les réfrigérants (3 et 4) et la colonne (5) garnie d'hélices de Fensk, de diamètre 4 mm sur une hauteur de 31 cm, la colonne ayant un diamètre interne de 5 cm. Lorsque le flugène atteint le dispositif (10) de trop-plein on fait passer dans le réacteur (1) le gaz ammoniac à un débit de 91,5 g/h (soit 5,38 mole/heure) grâce à la canalisation (11) débouchant dans la partie inférieure du réacteur. Lorsque l'ammoniac sort de la canalisation (16) on introduit à un débit de 396,5 g/h (soit 4,56 mole à l'heure) de la méthyléthyl cétoxime

(de formule 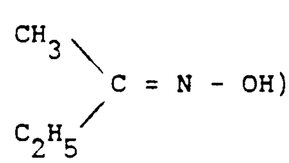

à la partie supérieure de la colonne (5), grâce à la canalisation (17). La cétoxime pénètre dans la partie inférieure du réacteur (1) grâce à la canalisation (19) après avoir été imprégnée du gaz ammoniac

provenant de la canalisation (15) et traversant le garnissage de cette colonne (5) de bas en haut. On introduit alors dans le réacteur (1) du vinyltrichlorosilane (de formule $CH_2 = CH - SiCl_3$) à un débit de 223 g/h (soit 1,38 mole/heure) grâce à la canalisation (21) débouchant à la partie inférieure du réacteur (1).

On continue à introduire dans le réacteur (1), pendant 2 heures 30 tous ces produits aux débits indiqués ci-avant, la température de la masse réactionnelle étant montée et s'étant stabilisée à 49-50 °C, tandis que le flugène reflue dans le réfrigérant (3).

Dans cet essai,

$$\text{le rapport pondéral } \frac{\text{flugène}}{CH_2 = CH - SiCl_3} \text{ est de 9,3,}$$

$$\text{le rapport } \frac{\text{nombre de moles de NH3}}{\text{nombre de moles de } CH_2 = CH - SiCl_3 \times 3} \text{ est de 1,3}$$

$$\text{le rapport } \frac{\text{nombre de moles de méthyléthylcétoxime}}{\text{nombre de moles de } CH_2 = CH - SiCl_3 \times 3} \text{ est de 1,1.}$$

Le temps de séjour des produits dans le réacteur est sensiblement de 30 minutes.

Pendant l'introduction des produits dans le réacteur (1), la masse réactionnnelle, sous forme de bouille, sort en continu par le dispositif de trop-plein dans la canalisation (23) pour être stockée dans le récipient (22). Au bout de 2 h 30 toute la masse réactionnelle est filtrée pour en éliminer le précipité de $NH_4Cl$ formé au cours de la réaction. Le gateau obtenu est lavé avec du flugène et la phase liquide comprenant le flugène, la cétoxime en excès et le vinyltris(méthyléthylcétoximo)silane formé est distillée.

Le rendement (par chromatographie) en vinyltris(méthyléthylcétoximo)silane par rapport au vinyltrichlorosilane chargé est de 93 %.

- EXEMPLE 2

Même essai que celui de l'exemple 1, sauf en ce qui concerne le débit de la méthyléthylcétoxime qui est de 372 g/h (soit 4,28 moles à l'heure) et le débit du vinyltrichlorosilane qui est de 228 g/h (sot 1,41 mole à l'heure).

Dans cet essai,

$$\text{le rapport pondéral } \frac{\text{flugène}}{CH_2 = CH\text{-}SiCl_3} \text{ est de 9,1,}$$

$$\text{le rapport } \frac{\text{nombre de moles de NH3}}{\text{nombre de moles de } CH_2 = CH\text{-}SiCl_3 \times 3} \text{ est de 1,27,}$$

$$\text{le rapport } \frac{\text{nombre de moles de méthyléthylcétoxime}}{\text{nombre de moles de } CH_2 = CH\text{-}SiCl_3 \times 3} \text{ est de 1,01.}$$

Le rendement (par chromatographie) en vinyltris(méthyléthylcétoxime)silane par rapport au vinyltrichlorosilane est de 93 %.

- EXEMPLE 3 :

Préparation de

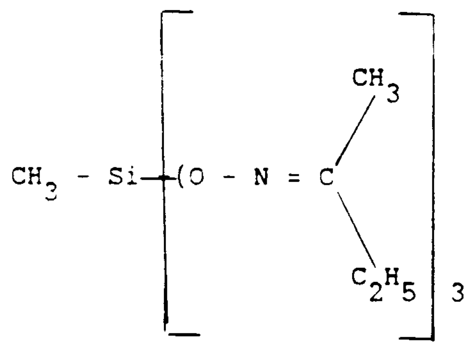

appelé notamment méthyltris(méthyléthylcétoximo)silane.

On opère de la même façon et avec le même appareillage que celui de l'exemple 1 en remplaçant le vinyltrichlorosilane par du méthyltrichlorosilane.

Les débits sont de :

| | |
|---|---|
| - flugène | 2 071,5 g/h |
| - ammoniac | 91,5 g/h (5,38 mole/heure) |
| - méthyléthylcétoxime | 372 g/h (4,28 mole/heure) |
| - méthyltrichlorosilane | 211,5 g/h (1,415 mole/heure). |

Le temps de séjour des produits dans le réacteur est de minutes.

$$\text{Le rapport pondéral } \frac{\text{flugène}}{\text{méthyltrichorosilane}} \text{ est de : 9,8}$$

$$\text{Le rapport } \frac{\text{nombre de moles de NH3}}{\text{nombre de moles de méthyltrichlorosilane x 3}} \text{ est de : 1,27}$$

$$\text{Le rapport } \frac{\text{nombre de moles de méthyléthylcétoxime}}{\text{nombre de moles de méthyltrichlorosilane x 3}} \text{ est de : 1,01}$$

Les produits sont introduits en continu et simultanément dans le réacteur pendant 3 heures.

Le rendement en méthyltris(méthyléthylcétoximo)silane par rapport au méthyltrichlorosilane chargé est de 93 % (par chromatographie).

## Revendications

**1.** Procédé de fabrication en continu d'oximinosilanes de formule $(R'R''C = N - O)_n - Si\ R_{4-n}$ caractérisé en ce que :

a) - on injecte en continu et simultanément dans un réacteur muni d'une agitation :

. un solvant organique,

. du gaz ammoniac,

. un silane halogéné de formule $R_{4-n}\ SiX_n$, dans lequel X représente un halogène et R représente un radical alkyle ayant de 1 à 15 atomes de carbone, de préférence de 1 à 6 atomes de carbone, un radical alkényle ayant de 2 à 15 atomes de carbone, de préférence de 2 à 6 atomes de carbone, un radical aryle, aralkyle, cycloalkyle ayant de 5 à 15 atomes de carbone, ces radicaux pouvant éventuellement avoir des atomes d'hydrogène substitués par des atomes d'halogènes inertes dans la réaction du procédé, n étant égal à 1, 2, 3 ou 4.

. une oxime de formule $R'R''C = N\text{-}OH$, dans laquelle R′ et R″ peuvent représenter un atome d'hydrogène, un radical alkyle ayant de 1 à 15 atomes de carbone, de préférence de 1 à 6 atomes de carbone, un radical alkényle ayant de 2 à 15 atomes de carbone, de préférence de 2 à 6 atomes de carbone,un radical aryle, cycloalkyle, cycloalkènyle, aralkyle ou alkylaryle ayant de 5 à 15 atomes de carbone, ces radicaux étant éventuellement substitués par des atomes d'halogènes inertes dans la réaction, R′ et R″ pouvant former ensemble un groupement alkylène tel que $-(CH_2)_m-$, dans lequel m représente 3 à 7, lesdits groupements méthylène pouvant avoir des atomes d'hydrogène substitués par des atomes d'halogènes inertes dans la réaction,

$$\text{le rapport } \frac{\text{nombre de moles de NH3}}{\text{nombre de moles de } R_{4-n}SiX_n \text{ multiplié par n}} \text{ étant compris entre 1,04 et 1,46}$$

$$\text{le rapport } \frac{\text{nombre de moles d'oxime}}{\text{nombre de moles de } R_{4-n}SiX_n \text{ multiplié par n}} \text{ étant compris entre 1 et 1,2,}$$

b) - on recueille la masse réactionnelle qui sort en continu du réacteur grâce à un dispositif de trop-plein,
c) - on élimine de cette masse réactionnelle le précipité de $XNH_4$ obtenu et on distille la phase liquide organique pour en recueillir l'oximinosilane.

**2.** Procédé selon la revendication 1, dans lequel les produits alimentant le réacteur sont introduits dans la partie inférieure de ce dernier, et dans lequel le rapport :

$$\frac{\text{nombre de moles d'oxime}}{\text{nombre de moles de } R_{4-n}\,SiX_n \text{ multiplié par n}}$$ est compris entre 1,005 et 1,05.

**3.** Procédé selon l'une quelconque des revendications 1 ou 2, caractérisé en ce que le rapport pondéral

$$\frac{\text{solvant}}{R_{4-n}\ SiX_n}$$

est compris entre 5 et 20.

**4.** Procédé selon l'une quelconque des revendications 1 à 3 dans lequel le solvant utilisé a un point d'ébullition inférieur à 60 °C.

**5.** Procédé selon l'une quelconque des revendications précédentes dans lequel le solvant utilisé est ininflammable.

**6.** Procédé selon l'une quelconque des revendications précédentes dans lequel le solvant utilisée est choisi parmi les alcanes perchlorofluorés.

**7.** Procédé selon la revendication 6 dans lequel le solvant utilisé est choisi parmi les trichlorotrifluoroéthanes.

**8.** Procédé selon l'une quelconque des revendications précédentes dans lequel le solvant recueilli en c) est envoyé de nouveau dans le réacteur.

**9.** Procédé selon l'une quelconque des revendications précédentes dans lequel le gaz ammoniac en excès s'échappant en continu du réacteur est mis en contact avec l'oxime avant que cette dernière soit introduite dans le réacteur.

**10.** Procédé selon l'une quelconque des revendications précédentes dans lequel le temps de séjour des réactifs dans le réacteur est inférieur à 1 heure, de préférence compris entre 10 et 40 minutes.

**11.** Procédé selon l'une quelconque des revendications précédentes dans lequel le silane halogéné utilisé est choisi parmi le méthyltrichlorosilane et le vinyltrichlorosilane tandis que l'oxime utilisée est la méthyléthylcétoxime.

## Claims

**1.** Process for the continuous production of oximinosilanes of formula $(R'R''C = N - O)_n - SiR_{4-n}$, characterised in that:
a) - the following are injected continuously and simultaneously into a reactor provided with a stirrer:
- an organic solvent,
- gaseous ammonia,

- a halogenated silane of formula $R_{4-n}SiX_4$, in which X represents a halogen and R represents an alkyl radical having from 1 to 15 carbon atoms, preferably from 1 to 6 carbon atoms, an alkenyl radical having from 2 to 15 carbon atoms, preferably from 2 to 6 carbon atoms, or an aryl, aralkyl or cycloalkyl radical having from 5 to 15 carbon atoms, it being possible for hydrogen atoms in said radicals optionally to be replaced by halogen atoms which are inert in the reaction of the process, n being equal to 1, 2, 3 or 4,
- an oxime of formula R'R"C = N-OH, in which R' and R" may represent a hydrogen atom, an alkyl radical having from 1 to 15 carbon atoms, preferably from 1 to 6 carbon atoms, an alkenyl radical having from 2 to 15 carbon atoms, preferably from 2 to 6 carbon atoms, or an aryl, cycloalkyl, cycloalkenyl, aralkyl or alkylaryl radical having from 5 to 15 carbon atoms, said radicals being optionally substituted by halogen atoms which are inert in the reaction, it being possible for R' and R" together to form an alkylene group such as $-(CH_2)_m-$, in which m represents 3 to 7, it being possible for hydrogen atoms in the said methylene groups to be replaced by halogen atoms which are inert in the reaction,

$$\text{the ratio } \frac{\text{number of moles of } NH_3}{\text{number of moles of } R_{4-n}SiX_n \text{ multiplied by n}}$$

being between 1.04 and 1.45, and

$$\text{the ratio } \frac{\text{number of moles of oxime}}{\text{number of moles of } R_{4-n}SiX_n \text{ multiplied by n}}$$

being between 1 and 1.2,

b) - the reaction mass which continuously issues from the reactor by virtue of an overflow device is collected,

c) - the $NH_4X$ precipitate obtained is removed from this reaction mass and the organic liquid phase is distilled in order to collect the oximinosilane.

**2.** Process according to Claim 1, in which the products feeding the reactor are introduced into the lower part of the latter, and in which the ratio:

$$\frac{\text{number of moles of oxime}}{\text{number of moles of } R_{4-n}SiX_n \text{ multiplied by n}}$$

is between 1.005 and 1.05.

**3.** Process according to either of Claims 1 and 2, characterised in that the weight ratio

$$\frac{\text{solvent}}{R_{4-n}SiX_n}$$

is between 5 and 20.

**4.** Process according to any one of Claims 1 to 3, in which the solvent used has a boiling point below 60 °C.

**5.** Process according to any one of the preceding claims, in which the solvent used is non-flammable.

**6.** Process according to any one of the preceding claims, in which the solvent used is chosen from perchlorofluorinated alkanes.

**7.** Process according to Claim 6, in which the solvent used is chosen from trichlorotrifluoroethanes.

**8.** Process according to any one of the preceding claims, in which the solvent collected in c) is recycled into the reactor.

**9.** Process according to any one of the preceding claims, in which the excess gaseous ammonia escaping continuously from the reactor is brought into contact with the oxime before the latter is introduced into the reactor.

**10.** Process according to any one of the preceding claims, in which the residence time of the reactants in the reactor is less than 1 hour, preferably between 10 and 40 minutes.

**11.** Process according to any one of the preceding claims, in which the halogenated silane used is chosen from methyltrichlorosilane and vinyltrichlorosilane, whilst the oxime used is methyl ethyl ketoxime.

**Patentansprüche**

**1.** Verfahren zur kontinuierlichen Herstellung von Oximinosilanen der Formel $(R'R''C = N - O)_n - Si\ R_{4-n}$, dadurch gekennzeichnet, daß man

a) kontinuierlich und gleichzeitig in einen mit einer Rührung versehenen Reaktor einspritzt:

- ein organisches Lösungsmittel,
- gasförmigen Ammoniak,
- ein Halogensilan der Formel $R_{4-n}\ SiX_n$, worin X für ein Halogen steht und R einen Alkylrest mit 1 bis 15 Kohlenstoffatomen, vorzugsweise 1 bis 6 Kohlenstoffatomen, einen Alkenylrest mit 2 bis 15 Kohlenstoffatomen, vorzugsweise 2 bis 6 Kohlenstoffatomen, einen Aryl-, Aralkyl-, Cycloalkylrest mit 5 bis 15 Kohlenstoffatomen bedeutet, wobei diese Reste gegebenenfalls Wasserstoffatome aufweisen können, die durch bei der Reaktion des Verfahrens inerte Halogenatome substituiert sind, wobei n für 1, 2, 3 oder 4 steht,
- ein Oxim der Formel $R'R''C = N\text{-}OH$, worin R' und R'' ein Wasserstoffatom, einen Alkylrest mit 1 bis 15 Kohlenstoffatomen, vorzugsweise 1 bis 6 Kohlenstoffatomen, einen Alkenylrest mit 2 bis 15 Kohlenstoffatomen, vorzugsweise 2 bis 6 Kohlenstoffatomen, einen Aryl-, Cycloalkyl-, Cycloalkenyl-, Aralkyl- oder Alkylarylrest mit 5 bis 15 Kohlenstoffatomen bedeuten können, wobei diese Reste gegebenenfalls durch bei der Reaktion inerte Halogenatome substituiert sind, wobei R' und R'' gemeinsam eine Alkylengruppe wie $-(CH_2)_m-$ bilden können, in der m für 3 bis 7 steht, die Methylengruppen Wasserstoffatome aufweisen können, die durch bei der Reaktion inerte Halogenatome substituiert sind,

$$\text{das Verhältnis } \frac{\text{Anzahl der Mole } NH_3}{\text{Anzahl der Mole } R_{4-n}SiX_n \text{ multipliziert mit } n}$$

zwischen 1,04 und 1,45 beträgt,

$$\text{das Verhältnis } \frac{\text{Anzahl der Mole Oxim}}{\text{Anzahl der Mole } R_{4-n}SiX_n \text{ multipliziert mit } n}$$

zwischen 1 und 1,2 beträgt,

b) die Reaktionsmasse, die aufgrund einer Überlaufvorrichtung kontinuierlich den Reaktor verläßt, sammelt,

c) aus dieser Reaktionsmasse den erhaltenen $XNH_4$-Niederschlag entfernt und die flüssige organische Phase destilliert, um hieraus das Oximinosilan zu erhalten.

2. Verfahren gemäß Anspruch 1, worin die den Reaktor speisenden Produkte in den unteren Teil des letztgenannten eingeführt werden und worin das Verhältnis

$$\frac{\text{Anzahl der Mole Oxim}}{\text{Anzahl der Mole } R_{4-n}\,SiX_n \text{ multipliziert mit n}}$$

zwischen 1,005 und 1,05 liegt.

3. Verfahren gemäß einem der Ansprüche 1 oder 2, dadurch gekennzeichnet, daß das Gewichtsverhältnis

$$\frac{\text{Lösungsmittel}}{R_{4-n}SiX_n}$$

zwischen 5 und 20 beträgt.

4. Verfahren gemäß einem der Ansprüche 1 bis 3, worin das verwendete Lösungsmittel einen Siedepunkt von geringer als 60 °C besitzt.

5. Verfahren gemäß einem der vorhergehenden Ansprüche, worin das verwendete Lösungsmittel nicht entflammbar ist.

6. Verfahren gemäß einem der vorhergehenden Ansprüche, worin das verwendete Lösungsmittel unter den Perchlorfluoralkanen ausgewählt wird.

7. Verfahren gemäß Anspruch 6, worin das verwendete Lösungsmittel unter den Trichlortrifluorethanen ausgewählt wird.

8. Verfahren gemäß einem der vorhergehenden Ansprüche, worin das unter c) gesammelte Lösungsmittel erneut in den Reaktor eingeführt wird.

9. Verfahren gemäß einem der vorhergehenden Ansprüche, worin das kontinuierlich dem Reaktor entweichende überschüssige gasförmige Ammoniak mit dem Oxim in Kontakt gebracht wird, bevor dieses letztere in den Reaktor eingeführt wird.

10. Verfahren gemäß einem der vorhergehenden Ansprüche, worin die Verweilzeit der Reagentien in dem Reaktor weniger als eine Stunde, vorzugsweise zwischen 10 und 40 Minuten beträgt.

11. Verfahren gemäß einem der vorhergehenden Ansprüche, worin das verwendete Halogensilan unter Methyltrichlorsilan und Vinyltrichlorsilan ausgewählt wird, während das verwendete Oxim das Methylethylketoxim ist.